# EUROPÄISCHE PATENTSCHRIFT

(11) **EP 3 631 827 B1**
(45) Veröffentlichungstag und Bekanntmachung des Hinweises auf die Patenterteilung: **14.12.2022**
(21) Anmeldenummer: 18734459.3
(22) Anmeldetag: 13.06.2018
(51) Int. Cl.: H01H 3/60, H01H 33/42, F16F 9/18, F16F 9/34, F16F 9/49

(54) **ANORDNUNG UND VERFAHREN ZUM DÄMPFEN VON SCHALTBEWEGUNGEN IN HOCHSPANNUNGSLEISTUNGSSCHALTERN**
ASSEMBLY AND METHOD FOR DAMPING SWITCHING MOVEMENTS IN HIGH-VOLTAGE CIRCUIT BREAKERS
DISPOSITIF ET PROCÉDÉ D'AMORTISSEMENT DE MOUVEMENTS DE COMMUTATION DANS DES COMMUTATEURS DE PUISSANCE À HAUTE TENSION

(30) Priorität: 13.07.2017 DE 102017212021
(43) Veröffentlichungstag der Anmeldung: 08.04.2020
(73) Patentinhaber: Siemens Energy Global GmbH & Co. KG, 81739 München (DE)
(72) Erfinder: BIETZ, Marian, 13591 Berlin (DE)
(86) Internationale Anmeldenummer: PCT/EP2018/065602
(87) Internationale Veröffentlichungsnummer: WO 2019/011562

(56) Entgegenhaltungen:
- EP-A1- 2 487 383
- DE-A1- 3 346 353

## Beschreibung

Die Erfindung betrifft eine Anordnung und ein Verfahren zum Dämpfen von Schaltbewegungen, mit einem Gehäuse, welches wenigstens einen Kolben räumlich umfasst, und welches wenigstens eine Stange zumindest teilweise räumlich umfasst. Die Stange ist relativ zum Gehäuse beweglich gelagert. Der wenigstens eine Kolben begrenzt ein erstes Fluidvolumen, welches über wenigstens eine Durchflussöffnung mit wenigstens einem zweiten Fluidvolumen direkt oder indirekt fluidisch verbunden ist.

Hochspannungsleistungsschalter schalten Spannungen im Bereich von bis zu 1200 kV. Diese Schalter müssen sehr schnell schalten, insbesondere im Bereich von Millisekunden. Dazu werden Kontaktstücke mechanisch sehr schnell bewegt, insbesondere über Elemente der kinematischen Kette, wie z. B. einer Schaltstange. Die mechanische Energie für die schnellen Bewegungen wird von einem Antrieb, z. B. einem Federspeicherantrieb bereitgestellt, und z. B. durch ein Getriebe und/oder über einen Hebelmechanismus auf die beweglichen Kontaktstücken übertragen. Das Bewegungsprofil, d. h. der zeitliche Verlauf der übertragenen Bewegungsenergie und/oder Kraft, wird über die Wahl des Antriebs und Elemente der kinematischen Kette, z. B. dem Getriebe, bestimmt. Um Beschädigungen an Elementen der kinematischen Kette zu verhindern, müssen z. B. am Ende der Schaltbewegung Elemente abgebremst werden. Dazu können Dämpfer, wie z. B. aus der DE 33 46 353 A1 und der EP 2 487 383 A1 bekannt, insbesondere hydraulische Dämpfer, verwendet werden.

Aus der Druckschrift DE 32 15 243 A1 ist ein hydraulischer Dämpfer bekannt, in Form eines Zylinder-Kolben Aggregates an einer Schaltstange. Bei einer Bewegung der Schaltstange wird eine Flüssigkeit, z. B. Öl, über einen Kolben von einem Flüssigkeitsvolumen in ein anderes Flüssigkeitsvolumen bewegt. Die zwei Flüssigkeitsvolumen sind durch eine zylindrische Trennwand voneinander getrennt, wobei in der Trennwand durchgehende Schlitze und Bohrungen als Durchflussöffnungen bzw. Fluidkanäle angeordnet sind. Die Bohrungen weisen alle den gleichen Querschnitt auf und sind in einem regelmäßigen Abstand voneinander im unteren Bereich der Trennwend angeordnet. Die viskose Flüssigkeit, d. h. Reibung beim Strömen der Flüssigkeit durch die Durchflussöffnungen, führt zu einer Dämpfung der Bewegung, insbesondere am Ende der Ausschaltbewegung. Die Schaltstange wird über den Dämpfer insbesondere am Ende der Ausschaltbewegung abgebremst.

Die regelmäßige Anordnung der Durchflussöffnungen, ausgebildet mit gleichem Durchflussquerschnitt, führt beim Fortschreiten der Ausschaltbewegung am Ende der Bewegung zu einer immer weiteren Vergrößerung der Dämpfung. Im unteren Bereich des Zylinder-Kolben Aggregates nimmt die Zahl der Bohrungen mit Fortschreiten der Ausschaltbewegung ab, durch welche Flüssigkeit vom inneren Flüssigkeitsvolumen ins äußere Flüssigkeitsvolumen strömen kann. Somit nimmt der für die Flüssigkeit wirksame Gesamtströmungsquerschnitt zum Strömen der Flüssigkeit vom inneren Flüssigkeitsvolumen ins äußere Flüssigkeitsvolumen ab. Weniger Flüssigkeit kann in einer Zeiteinheit vom inneren Flüssigkeitsvolumen ins äußere Flüssigkeitsvolumen strömen und der Gegendruck gegen den Kolben steigt. Dadurch nimmt die Dämpfung der Bewegung zu und die Schaltstange wird immer stärker, d. h. schneller abgebremst. Die Abbremsung der Bewegung der Schaltstange beim Ausschaltvorgang verläuft nicht linear mit der Zeit, mit konstanter Dämpfungskonstante, sondern verstärkt, d. h. die Dämpfung nimmt zu.

Die Entwicklung neuer Schalter, insbesondere von Hochspannungsleistungsschaltern mit Vakuumröhren und Clean Air als Isolator-Gas, erfordert andere Bewegungsprofile als bekannte Hochspannungsleistungsschalter mit Nenn- und Lichtbogenkontaktstücken in z. B. SF₆ Umgebung. Die Bewegungsprofile können über aufwendigere Getriebeformen und zusätzliche Elemente in der kinematischen Kette, wie z. B. Hebeln erzeugt werden. Dies ist teuer und technisch aufwendig. Aus dem Stand der Technik bekannte hydraulische Dämpfer ermöglichen nur eine Dämpfung mit zeitlich gleichbleibender Dämpfungskonstante oder einer zunehmenden Dämpfung, z. B. beim Fortschreiten der Ausschaltbewegung. Eine Dämpfung mit zu und darauffolgend abnehmender Dämpfungsrate bei einer Bewegung bzw. Dämpfungskonstante der Dämpfer ist nicht möglich mit dem beschriebenen Aufbau. Dadurch ist es nicht möglich mit den hydraulischen Dämpfern, bekannt aus dem Stand der Technik, einfach und kostengünstig ein Bewegungsprofil zu erzeugen, welches eine zunehmende Abbremsung insbesondere der Schaltstange beim Ausschaltvorgang aufweist, mit zeitlich darauffolgender Abnahme der Abbremsung bzw. Dämpfungsrate.

Aufgabe der vorliegenden Erfindung ist es, eine Anordnung und ein Verfahren zum Dämpfen von Schaltbewegungen insbesondere in Hochspannungsleistungsschaltern anzugeben, welche einfach und kostengünstig sind, und insbesondere beim Aussachaltvorgang eine Zu- und Abnahme der Dämpfungsrate während eines Schaltvorgangs ermöglichen. Insbesondere ist es Aufgabe eine Anordnung nach Art eines hydraulischen Dämpfers insbesondere für Hochspannungsleistungsschalter anzugeben, mit der ein Bewegungsprofil über den Dämpfer ermöglicht wird, mit einer Abbremsung und darauffolgenden Beschleunigung z. B. einer Schaltstange insbesondere zum Ende einer Schaltbewegung hin.

Die angegebene Aufgabe wird erfindungsgemäß durch eine Anordnung zum Dämpfen von Schaltbewegungen mit den Merkmalen gemäß Patentanspruch 1 und/oder durch ein Verfahren zum Dämpfen von Schaltbewegungen in einem Hochspannungsleistungsschalter, insbesondere unter Verwendung der zuvor beschriebenen Anordnung, gemäß Patentanspruch 13 gelöst. Vorteilhafte Ausgestaltungen der erfindungsgemäßen Anordnung zum Dämpfen von Schaltbewegungen und/oder des Verfahrens zum Dämpfen von Schaltbewegungen in einem Hochspannungsleistungsschalter, insbesondere unter Verwendung der zuvor beschriebenen Anordnung, sind in den Unteransprüchen angegeben. Dabei sind Gegenstände der Hauptansprüche untereinander und mit Merkmalen von Unteransprüchen sowie Merkmale der Unteransprüche untereinander kombinierbar.

Eine erfindungsgemäße Anordnung zum Dämpfen von Schaltbewegungen umfasst ein Gehäuse, welches wenigstens einen Kolben räumlich umfasst, und welches wenigstens eine Stange zumindest teilweise räumlich umfasst. Die Stange ist relativ zum Gehäuse beweglich gelagert. Der wenigstens eine Kolben begrenzt ein erstes Fluidvolumen, welches über wenigstens eine Durchflussöffnung mit wenigstens einem zweiten Fluidvolumen direkt oder indirekt fluidisch verbunden ist. Die wenigstens eine Stange ist an einem Ende hohlrohrförmig ausgebildet und umfasst das erste Fluidvolumen räumlich. Der wenigstens eine Kolben ist in dem hohlrohrförmigen Ende der wenigstens einen Stange geführt.

Der beschrieben Aufbau der Anordnung zum Dämpfen von Schaltbewegungen, insbesondere in Hochspannungsleistungsschaltern, ist einfach und kostengünstig. Insbesondere beim Aussachaltvorgang ist eine Zu- und Abnahme der Dämpfungsrate zeitlich aufeinanderfolgend während eines Schaltvorgangs möglich. Die Anordnung ist nach Art eines hydraulischen Dämpfers ausgeführt, und ermöglicht über den Dämpfer ein Bewegungsprofil z. B. einer Schaltstange mit verbundenen beweglichen Kontaktstück bzw. Kontaktstücken, mit einer Abbremsung und darauffolgenden Beschleunigung insbesondere zum Ende der Schaltbewegung hin. Insbesondere für Hochspannungsleistungsschalter mit Vakuumschaltern ist eine beschleunigte Bewegung zum Ende der Schaltbewegung hin günstig.

Der wenigstens eine Kolben kann räumlich fest gegenüber dem Gehäuse angeordnet sein. Die Schaltstange ist beweglich und der Kolben ist in dem hohlrohrförmigen Ende der wenigstens einen Stange geführt, wobei bei einer Bewegung sich die Stange im Gehäuse bewegt und der Kolben fest steht relativ zum Gehäuse. Bei Bewegung der Stange bewegt sich der gegenüber dem Gehäuse feste Kolben relativ zur Stange im hohlrohrförmigen Ende der Stange. Das Fluid im ersten Fluidvolumen strömt durch die Durchflussöffnungen. Abhängig von der Summe der Durchmesser der Durchflussöffnungen kann nur eine bestimmte Menge Fluid durch die Durchflussöffnungen pro Zeit strömen, und ein Gegendruck zur Bewegung des Kolbens relativ zur Stange wird im ersten Fluidvolumen aufgebaut. Dadurch wird die Bewegung des Kolbens relativ zur Stange, bzw. die Bewegung der Stange gedämpft bzw. abgebremst.

Der Kolben kann insbesondere über einen Steg mit dem Gehäuse verbunden sein. Dadurch wird der Steg relativ zum Gehäuse mechanisch, räumlich fixiert. Der Steg kann einen kleineren Querschnitt senkrecht zu Längsachse des Stegs aufweisen als der Kolben. Dabei bildet sich zwischen Kolben und hohlrohrförmigen Ende der Stange ein Fluidvolumen in Form eines durchströmbaren Fluidkanals. Das zweite Fluidvolumen umfasst den durchströmbaren Fluidkanal.

Das erste Fluidvolumen kann mit dem zweiten Fluidvolumen über ein drittes Fluidvolumen verbunden sein, insbesondere mit fluidischer Verbindung des ersten und dritten Fluidvolumens sowie des dritten und zweiten Fluidvolumens über Durchflussöffnungen in einer Wandung des hohlrohrförmigen Endes der wenigstens einen Stange. Dabei bildet sich durch die Bewegung des Kolbens relativ zum hohlrohrförmigen Ende der Stange im ersten Fluidvolumen ein Druck abhängig vom Fluid, der Größe des ersten Fluidvolumens und dem durchströmbaren Querschnitt der Durchflussöffnungen, welche im fluidischen Kontakt mit dem ersten Fluidvolumen stehen. Weiterhin bildet sich durch die Bewegung des Kolbens relativ zum hohlrohrförmigen Ende der Stange im zweiten Fluidvolumen ein Druck abhängig vom Fluid, der Größe des zweiten Fluidvolumens und dem durchströmbaren Querschnitt der Durchflussöffnungen, welche im fluidischen Kontakt mit dem zweiten Fluidvolumen stehen. Die Dämpfung der Bewegung der Stange zu einem Zeitpunkt ist abhängig von den Drücken im ersten und zweiten Fluidvolumen. Ein Druckausgleich zwischen dem ersten und zweiten Fluidvolumen erfolgt über die Durchflussöffnungen und das dritte Fluidvolumen.

Das erste Fluidvolumen kann durch die Wandung des hohlrohrförmigen Endes der wenigstens einen Stange und dem Kolben begrenzt sein bzw. werden. Das dritte Fluidvolumen kann zwischen der Stange und dem Gehäuse ausgebildet sein bzw. werden. Das zweite Fluidvolumen kann durch das Gehäuse und durch die Wandung des hohlrohrförmigen Endes der wenigstens einen Stange begrenzt sein bzw. werden sowie insbesondere den Kolben mit Steg und insbesondere Öffnungen umfassen, welche durch das Gehäuse verschlossen sind.

Mehrere Durchflussöffnungen können umfasst sein, insbesondere in der Wandung des hohlrohrförmigen Endes der wenigstens einen Stange entlang der Längsachse der Stange angeordnet. Mit fortschreitender Bewegung der Stange entlang der Längsachse in Richtung Kolben, womit das erste Fluidvolumen abnimmt, überstreift der Kolben Durchflussöffnungen und verschließt diese. Der Gesamtquerschnitt der Durchflussöffnungen für das Fluid zum Strömen aus dem ersten Fluidvolumen nimmt ab. Dabei können auf der entgegengesetzten Seite des Kolbens Durchflussöffnungen mit fortschreitender Bewegung freigegeben werden. Der Kolben kann auf letzterer Seite über einen Steg am Gehäuse befestigt sein, wobei der Steg schmaler ausgebildet ist im Umfang als der Kolben. Dadurch ist ein Fluidkanal zwischen der Wandung des hohlrohrförmigen Endes der wenigstens einen Stange und dem Steg ausgebildet, welcher im Fluidvolumenteil zwischen Gehäuse und Stange am Ende der Stange endet und vom zweiten Fluidvolumen umfasst wird bzw. ist.

In einem Bereich, welcher entlang der Längsachse der Stange kürzer ausgebildet ist als der Steg, insbesondere mit im Wesentlichen gleicher Längsachse von Steg, Stange und/oder Gehäuse, kann das Gehäuse einen verringerten Innendurchmesser aufweisen. Dieser verengte Bereich kann im Wesentlichen den Innendurchmesser aufweisen, welcher dem Außendurchmesser der Stange in diesem Bereich entspricht. Mit fortschreitender Bewegung der Stange können Durchflussöffnungen in der Wandung der Stange nach außen hin im verengten Bereich vom Gehäuse verschlossenen werden, womit sich der Gesamtquerschnitt für den Durchfluss von Fluid vom dritten zum zweiten Fluidvolumen hin ändert und somit die Dämpfungsrate.

Der Fluiddurchfluss und somit die Dämpfungsrate der Anordnung kann sich somit aus dem Gesamtquerschnitt von Durchflussöffnungen für den Durchfluss von Fluid vom ersten zum dritten Fluidvolumen in Verbindung mit dem Gesamtquerschnitt von Durchflussöffnungen für den Durchfluss von Fluid vom dritten zum zweiten Fluidvolumen ergeben. Die Gesamtquerschnitte, d. h. die Summe der Querschnitte von Durchflussöffnungen für den Durchfluss von Fluid, ändern sich im Verlauf der Bewegung der Stange, insbesondere durch Verschluss von Durchflussöffnungen zwischen dem ersten und dritten Fluidvolumen über den Kolben und durch Freigabe von Durchflussöffnungen zwischen dem dritten und zweiten Fluidvolumen auf der anderen Seite des Kolbens sowie durch Verschluss von Durchflussöffnungen durch das Gehäuse, insbesondere dem verengten Bereich des Gehäuses.

Durchflussöffnungen mit unterschiedlichen Durchflussquerschnitten können umfasst sein. So kann z. B. über abwechselnd große und kleine Querschnitte der Durchflussöffnungen entlang der Bewegungsrichtung der Stange eine Zunahme der Dämpfung mit fortschreitender Bewegung der Stange erreicht werden, mit darauffolgender Abnahme der Dämpfung bzw. der Dämpfungsrate. Es kann auch die Zahl der Durchflussöffnungen pro Längeneinheit der Stange bestimmt ausgewählt sein, deren Form und/oder Anordnung in regelmäßigen oder unregelmäßigen Abständen entlang des Umfangs und/oder entlang der Längsachse der Stange variiert werden, um den Gesamtquerschnitte, d. h. die Summe der Querschnitte von Durchflussöffnungen für den Durchfluss von Fluid von einem zum anderen Fluidvolumen, insbesondere vom ersten zum dritten Fluidvolumen und/oder vom dritten zum zweiten Fluidvolumen und umgekehrt, zu jedem Zeitpunkt der Bewegung zu bestimmen bzw. zu definieren.

Zwischen dem Gehäuse und der wenigstens einen Stange ist eine hohle Hülse angeordnet, in welcher das hohlrohrförmige Ende der wenigstens einen Stange geführt ist, wobei Durchflussöffnungen in der Hülse vorgesehen sind.

Die Hülse kann das dritte Fluidvolumen in zwei Teile teilen, insbesondere mit wenigstens einer Durchflussöffnung, welche die zwei Teile des dritten Fluidvolumens fluidisch miteinander verbindet. Wenigstens eine Durchflussöffnung kann insbesondere in der Wandung des hohlrohrförmigen Endes der wenigstens einen Stange angeordnet sein, welche einen ersten Teil des dritten Fluidvolumens fluidisch mit dem ersten Fluidvolumen verbindet. Wenigstens eine Durchflussöffnung kann in der Hülse insbesondere am Ende der Hülse angeordnet sein, welche einen zweiten Teil des dritten Fluidvolumens fluidisch mit dem zweiten Fluidvolumen verbindet. Insbesondere über die Wahl der Größe, Form und Anordnung der Durchflussöffnungen in der Hülse und/oder in der Wandung der Stange, kann die Dämpfung der Anordnung wie zuvor beschrieben im zeitlichen Verlauf der Bewegung vorbestimmen bzw. definiert, d. h. gesteuert werden.

Elemente der Anordnung können zylinderförmig ausgebildet sein, insbesondere das Gehäuse, und/oder die wenigstens eine Stange, und/oder der wenigstens eine Kolben, und/oder wenigstens eine Hülse, und/oder wenigstens ein Steg. Zylinderförmige Elemente sind einfach und kostengünstig herstellbar und weisen eine hohe mechanische Stabilität auf.

Durchflussöffnungen können als permanente Bohrung oder Fräsung und/oder flötenförmig ausgebildet sein. Flötenförmig bedeutet im Weiteren, dass verschiedene Durchflussöffnungen entlang der Längsachse hintereinander und/oder entlang des Umfangs nebeneinander insbesondere mit unterschiedlichen Querschnitten ausgebildet sein können, entsprechend den Öffnungen in einer Flöte, mit den zuvor beschriebenen Vorteilen.

Das erste, und/oder das zweite, und/oder das dritte Fluidvolumen können insbesondere vollständig mit einem Fluid und/oder einer Fluidmischung befüllt sein. Fluide sind z. B. Gase inklusive Gasgemische, insbesondere Luft und/oder Clean Air, und/oder Flüssigkeiten inklusive Flüssigkeitsgemische, insbesondere Öle. Die Viskosität des Fluids kann die Dämpfung mit bestimmen.

Die Anordnung kann von einem Hochspannungsleistungsschalter insbesondere zum Dämpfen von Schaltbewegungen umfasst sein. Durch die Verwendung der Anordnung in Hochspanungsleistungsschaltern, insbesondere bei Spannungen von bis zu 1200 kV und/oder Strömen von einigen hundert Ampere, ist eine Dämpfung der Schaltbewegung von Kontaktstücken und anderen Elementen der kinematischen Kette des Schalters, z. B. der Schaltstange möglich. Neuartige Bewegungsprofile, insbesondere mit einer Zunahme der Dämpfung zu Beginn der Schaltbewegung und einer Abnahme der Dämpfung am Ende der Schaltbewegung, sind einfach und kostengünstig möglich. Dadurch wird z. B. eine Schaltstange am Anfang einer Einschaltbewegung immer mehr abgebremst, und am Ende der Einschaltbewegung kann insbesondere für Vakuumschalter eine Verringerung der Abbremsung bis hin zu einer Beschleunigung der Schaltstange erfolgen, z. B. um Energie für eine Verklinkung von Kontaktstücken im kontaktierten, aneinander gepressten Zustand zu erreichen. Die Energie kann ebenfalls genutzt werden um eine Feder zu spannen, welche beim Ausschalten ein Trennen von Kontaktstücken unterstützt. Die erfindungsgemäße Anordnung ermöglicht beim Ausschalten z. B. eine geringe Dämpfung am Anfang der Schaltbewegung, eine Zunahme der Dämpfung während der Schaltbewegung und/oder eine Abnahme der Dämpfung zum Ende der Schaltbewegung. Es sind insbesondere durch Form, Anordnung und Querschnitt der Durchflussöffnungen, z. B. mit abwechselnden zu und abnehmenden Querschnitten, unterschiedliche Bewegungsprofile realisierbar, mit aufeinander wechselnden Zu- und Abnahmen der Dämpfung.

Ein erfindungsgemäßes Verfahren zum Dämpfen von Schaltbewegungen in einem Hochspannungsleistungsschalter, insbesondere unter Verwendung der zuvor beschriebenen Anordnung, umfasst, dass die Dämpfungsrate der Anordnung zum Dämpfen in einem Zeitabschnitt im zeitlichen Verlauf der Schaltbewegung abnimmt, insbesondere nach einer vorherigen Zunahme der Dämpfungsrate während der Schaltbewegung.

Dabei kann eine Stange mit einem hohlrohrförmigen Ende in einem Gehäuse derart bewegt werden, dass sich ein Kolben in dem hohlrohrförmigen Ende der Stange bewegt und ein Fluid aus einem ersten Fluidvolumen in dem hohlrohrförmigen Ende der Stange über Durchflussöffnungen in der Wandung des hohlrohrförmigen Endes in ein drittes Fluidvolumen fließt, welches zwischen der Stange und dem Gehäuse ausgebildet wird, und Fluid von einem zweiten Fluidvolumen, welches vom Kolben, dem Ende der Stange und dem Gehäuse umfasst wird, in das dritte Fluidvolumen über Durchflussöffnungen in der Wandung des hohlrohrförmigen Endes der Stange fließt.

Alternativ kann eine Stange mit einem hohlrohrförmigen Ende in einer Hülse, welche in einem Gehäuse angeordnet wird, derart bewegt werden, dass sich ein Kolben in dem hohlrohrförmigen Ende der Stange bewegt und ein Fluid aus einem ersten Fluidvolumen in dem hohlrohrförmigen Ende der Stange über Durchflussöffnungen in der Wandung des hohlrohrförmigen Endes in einen ersten Teil des dritten Fluidvolumens fließt, welches zwischen der Stange und der Hülse ausgebildet wird, und Fluid von dem ersten Teil des dritten Fluidvolumens in einen zweiten Teil des dritten Fluidvolumens über Durchflussöffnungen in der Hülse fließt, wobei der zweite Teil des dritten Fluidvolumens von der Hülse und dem Gehäuse gebildet wird, und Fluid von einem zweiten Fluidvolumen, welches von dem Kolben, dem Ende der Stange, der Hülse und dem Gehäuse umfasst wird, über Durchflussöffnungen in der Hülse in den zweiten Teil des dritten Fluidvolumens fließt.

Die Vorteile des erfindungsgemäßen Verfahrens zum Dämpfen von Schaltbewegungen in einem Hochspannungsleistungsschalter, insbesondere unter Verwendung der zuvor beschriebenen Anordnung, gemäß Anspruch 13 sind analog den zuvor beschriebenen Vorteilen der erfindungsgemäßen Anordnung zum Dämpfen von Schaltbewegungen gemäß Anspruch 1 und umgekehrt.

Im Folgenden werden Ausführungsbeispiele der Anordnung zum Dämpfen von Schaltbewegungen nach dem Stand der Technik in den Figuren 1 und 2 sowie Ausführungsbeispiele der erfindungsgemäßen Anordnung zum Dämpfen von Schaltbewegungen schematisch in den Figuren 3 und 4 dargestellt, und nachfolgend näher beschrieben.

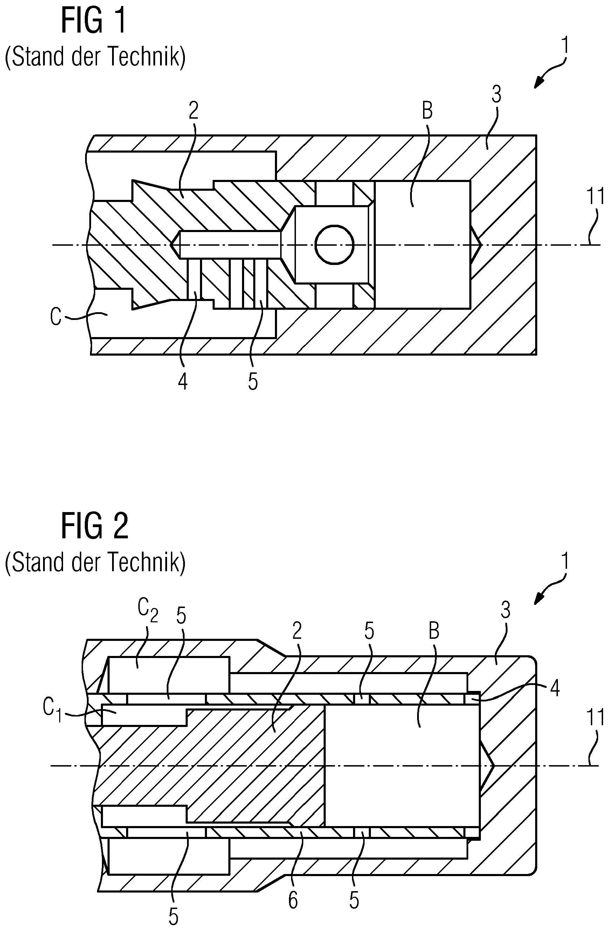

Dabei zeigen die
- Figur 1: schematisch einen Teil einer Anordnung 1 zum Dämpfen von Schaltbewegungen nach dem Stand der Technik entlang eines Längsschnittes, mit einer beweglichen Kolbenstange 2 in einem Gehäuse 3, und mit Durchflussöffnungen 4, 5 an einem Ende der Kolbenstange 2, und
- Figur 2: schematisch in Schnittansicht einen Teil einer Anordnung 1 analog der Figur 1, mit Durchflussöffnungen 4, 5 in einer Hülse 6 zwischen Kolbenstange 2 und Gehäuse 3 statt Durchflussöffnungen in der Kolbenstange 2, und

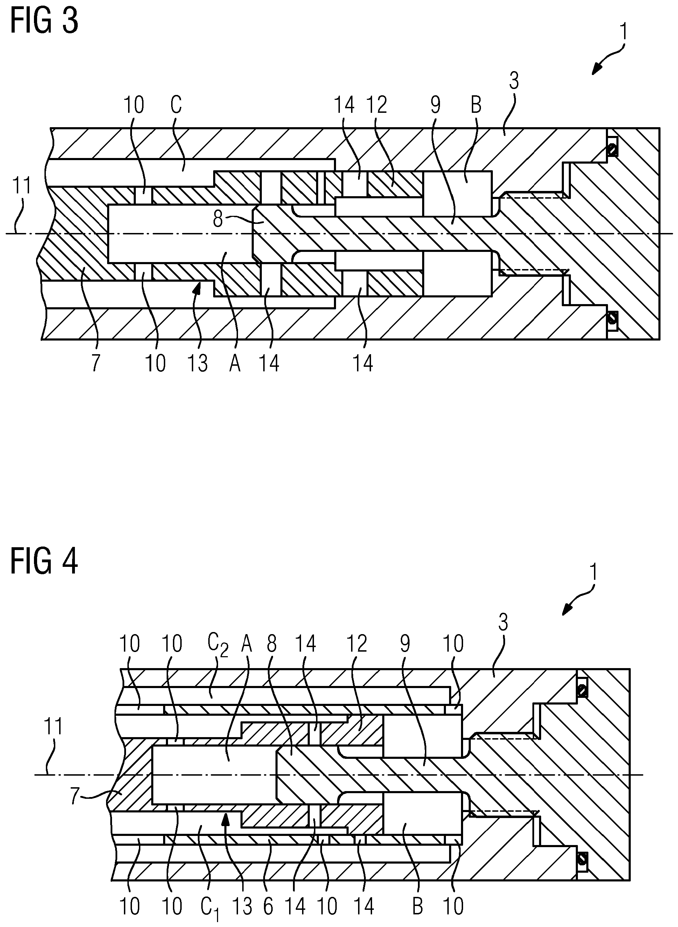

- Figur 3: schematisch einen Teil einer Anordnung 1 , die nicht Teil der Erfindung ist, zum Dämpfen von Schaltbewegungen entlang eines Längsschnittes, in Form eines ersten Ausführungsbeispiels, mit einem Kolben 8 fest mit einem Gehäuse 3 verbunden, welcher in einem hohlrohrförmigen Ende 13 einer Stange 7 geführt ist, mit Durchflussöffnungen 10, 14 in der Wandung des hohlrohrförmigen Endes 13, und
- Figur 4: schematisch in Schnittansicht ein Ausführungsbeispiel einer erfindungsgemäßen Anordnung 1 mit einer Hülse 6 mit Durchflussöffnungen, angeordnet zwischen hohlrohrförmigen Ende 13 der Stange 7 und Gehäuse 3.

In Figur 1 ist schematisch ein Teil einer Anordnung 1 zum Dämpfen von Schaltbewegungen nach dem Stand der Technik dargestellt. Der als Schnitt entlang einer Längsachse gezeigte Teil umfasst eine bewegliche Kolbenstange 2 in einem Gehäuse 3, wobei über Fluidströmungen durch Durchflussöffnungen 4, 5 im Ende der Kolbenstange 2 eine Dämpfung der Bewegung der Kolbenstange 2 erfolgt. Dazu sind zwei Fluidvolumen B, C im Gehäuse 3 fluidisch über Durchflussöffnungen, insbesondere in Form von Bohrungen in der Kolbenstange 4, 5 ausgebildet, miteinander verbunden.

Die Kolbenstange 2 ist mit dem äußeren Umfang an einem Ende im Wesentlichen gleich dem inneren Umfang des Gehäuses 3 ausgebildet, und im Gehäuse beweglich gelagert und entlang der Längsachse 11 im Gehäuse 3 geführt. Das Gehäuse 3, die Kolbenstange 2 und Bohrungen sind im Wesentlichen rotationssymmetrisch und/oder zylindrisch ausgebildet. Das hohlzylinderförmige bzw. rohrförmige Gehäuse 3 und die Kolbenstange 2 weisen im Wesentlichen eine Längsachse 11 auf, entlang weleher die Kolbenstange 2 relativ zum Gehäuse 3 im Gehäuse 3 bewegbar ist. An einem Ende der Kolbenstange 2 und des hohlrohrförmigen Gehäuses 3, wobei letzteres am Ende verschlossen ist, ist zwischen Kolbenstange 2 und hohlrohrförmigem Gehäuses 3 das Fluidvolumen B gebildet.

Die Kolbenstange 2 ist am Ende in Form eines Kolbens ausgebildet, d. h. mit einem größeren Umfang als dem Umfang in Bereichen der Kolbenstange 2 entfernt vom Ende. Das hohlrohrförmige Gehäuse 3 ist im Bereich des Kolbens mit einem geringeren Umfang ausgebildet als dem Umfang in Bereichen des Gehäuses 3 entfernt vom Ende. Im Bereich des Endes der Kolbenstange 2 schließt zumindest ein Teil des Kolbens im Wesentlichen fluiddicht mit dem Gehäuse 2 ab, und entlang des Bereichs des Gehäuses 3 mit größerem Umfang ist ein Fluidvolumen C zwischen Kolbenstange 2 und Gehäuse 3 gebildet.

Bei einer Bewegung der Kolbenstange 2 in Richtung Ende des Gehäuses 3, wie es in Figur 1 dargestellt ist, wird das Fluid im Fluidvolumen B komprimiert und der erhöhte Druck im Fluidvolumen B bewirkt eine Kraft entgegengesetzt zur Bewegungsrichtung der Bewegung der Kolbenstange 2. Der erhöhte Druck führt zu einer Fluidströmung durch die Durchflussöffnungen 4, 5 im Ende der Kolbenstange 2, um einen Druckausgleich zwischen dem Fluidvolumen B und C zu erreichen. Das Fluid ist z. B. ein Gas oder Gasgemisch, wie z. B. Luft, oder umfasst eine Flüssigkeit oder ein Flüssigkeitsgemisch, z. B. ein Öl. Eine Fluidströmung durch die Durchflussöffnungen 4, 5 ist unter anderem abhängig von der Zahl der Durchflussöffnungen 4, 5, deren Lage, Form und Querschnitt, sowie vom Fluid, insbesondere dessen Viskosität. Abhängig davon erfolgt die Abbremsung der Kolbenstange 2 im Gehäuse 3, d. h. ist die Größe der Dämpfung bzw. der Dämpfungskonstante der Anordnung 1.

Die Durchflussöffnungen 4, 5 sind entlang der Längsachse 11 als permanente Bohrungen 4 ausgebildet und/oder z. B. in Form von Flötenbohrungen 5. Flötenbohrungen 5 sind Bohrungen entlang der Längsachse 11 mit bestimmten Abstand voneinander angeordnet, insbesondere mit gleichem und/oder unterschiedlichen Abstand zwischen Bohrungen. Analog den Öffnungen in einer Flöte können die Flötenbohrungen 5 gleiche oder unterschiedliche Durchmesser bzw. Querschnitte aufweisen, durch welche die Fluidströmung mit bestimmt wird.

Mit fortschreitender Bewegung der Kolbenstange 2 in Richtung Ende wird eine zunehmende Anzahl an Flötenbohrungen 5 von dem Gehäuse 2 verschlossen, d. h. von dem Bereich des Gehäuses 3 am Ende, mit kleinerem Umfang als dem restlichen Bereich des Gehäuses 3. Der Gesamtquerschnitt der Durchflussöffnungen 5, welche für die Fluidströmung zur Verfügung stehen bzw. durch welche Fluid strömt, nimmt ab. Damit nimmt die Dämpfung bzw. Dämpfungsrate der Anordnung 1 mit fortschreitender Bewegung der Kolbenstange 2 in Richtung Ende zu.

Mit fortschreitender Bewegung der Kolbenstange 2 in die entgegengesetzte Richtung, vom Ende weg, wird eine zunehmende Anzahl an Flötenbohrungen 5 von dem Gehäuse 2 nicht mehr verschlossen, d. h. freigegeben vom Bereich des Gehäuses 3 am Ende, mit kleinerem Umfang als dem restlichen Bereich des Gehäuses 3. Der Gesamtquerschnitt der Durchflussöffnungen 5, welche für die Fluidströmung zur Verfügung stehen bzw. durch welche Fluid strömt, nimmt zu. Damit nimmt die Dämpfung bzw. Dämpfungsrate der Anordnung 1 mit fortschreitender Bewegung der Kolbenstange 2 vom Ende weg ab.

Permanente Bohrungen 4 werden während und nach der Bewegung nicht verschlossen. Dadurch ist eine Fluidströmung während der gesamten Bewegung möglich, und insbesondere Fluid des Fluidvolumens B kann vollständig in das Fluidvolumen C und in Durchflussöffnungen 4, 5 überführt werden. Bei einer Bewegung der Kolbenstange 2 in einer Richtung erfolgt nur eine Abnahme oder eine Zunahme der Dämpfung bzw. Dämpfungsrate. Eine Zunahme und darauffolgende Abnahme der Dämpfung bzw. Dämpfungsrate während einer Bewegung, d. h. einer Bewegung in einer Richtung, ist nicht möglich.

In Figur 2 ist schematisch ein Teil einer alternativen Anordnung 1 zum Dämpfen von Schaltbewegungen nach dem Stand der Technik dargestellt. Der als Schnitt entlang einer Längsachse gezeigte Teil umfasst, analog der Anordnung der Figur 1, eine bewegliche Kolbenstange 2 in einem Gehäuse 3. Zwischen Kolbenstange 2 und Gehäuse 3 ist im Ausführungsbeispiel der Anordnung 1 der Figur 2 eine Hülse 6 angeordnet. Im Unterschied zum Ausführungsbeispiel der Anordnung 1 in Figur 1 sind im Ausführungsbeispiel der Anordnung 1 der Figur 2 Durchflussöffnungen 4, 5 nicht in der Kolbenstange 2 sondern in der Hülse 6 ausgebildet.

Eine Dämpfung der Bewegung der Kolbenstange 2 erfolgt über Fluidströmungen durch Durchflussöffnungen 4, 5 in der Hülse 6. Die zwei Fluidvolumen B, C im Gehäuse 3 sind fluidisch über die Durchflussöffnungen 4, 5 in der Hülse miteinander verbunden. Das Fluidvolumen B ist ausgebildet zwischen einem Ende der Kolbenstange 2, der Hülse 6 und einem Ende des Gehäuses 3. Das Fluidvolumen C ist durch die Hülse unterteilt in zwei Teile C1 und C2. Das Fluidvolumen C1 ist ausgebildet zwischen der Kolbenstange 2 und der Hülse 6. Das Fluidvolumen C2 ist ausgebildet zwischen der Hülse 6 und dem Gehäuse 3. Die zwei Teile des Fluidvolumens C sind über Durchflussöffnungen 5 in der Hülse 6 miteinander verbunden, und über Durchflussöffnungen 4, 5 in der Hülse 6 verbunden mit dem Fluidvolumen B.

Der äußere Umfang des Endbereichs der Kolbenstange 2, ausgebildet in Form eines Kolbens mit größerem Umfang als andere Bereiche der Kolbenstange 2, ist im Wesentlichen gleich dem inneren Umfang der Hülse 6. Der Kolben der Kolbenstange 2 ist geführt in der Hülse 6 und schließt fluidisch eine Seite des Fluidvolumens B im Wesentlichen ab, insbesondere gegenüber dem Fluidvolumen C1. Bei Bewegung der Kolbenstange 2 gegenüber dem Gehäuse entlang der Längsachse 11 ändert sich das Volumen des Fluidvolumens B, und umgekehrt proportional ändert sich das Volumen des Fluidvolumens C1. Die Fluidvolumen B und C sind mit einem Fluid, insbesondere einem Gas oder Gasgemisch, z. B. Luft, und/oder einer Flüssigkeit oder einem Flüssigkeitsgemisch, z. B. Öl, gefüllt, insbesondere vollständig befüllt.

Bei einer Bewegung der Kolbenstange 2 in Richtung des Endes des Gehäuses 3, welches in Figur 2 dargestellt ist, wird das Fluid im Fluidvolumen B komprimiert und der Druck steigt im Fluidvolumen B. Der Druckanstieg bewirkt eine Kraft auf die Kolbenstange 2, insbesondere den Kolben der Kolbenstange 2, welche der Bewegung der Kolbenstange 2 entgegenwirkt. Die Bewegung der Kolbenstange 2 wird gedämpft bzw. abgebremst. Im Fluidvolumen C, insbesondere im Fluidvolumen C1, entwickelt sich der Fluiddruck umgekehrt proportional zum Fluiddruck im Fluidvolumen B. Ein Ausgleich der Fluiddrücke im Fluidvolumen B und in den Fluidvolumen C1 und C2 erfolgt über die Durchflussöffnungen 4, 5, Abhängig von der Lage, Anzahl und Größe, d. h. Form und Querschnitt der Durchflussöffnungen 4, 5. Je größer der Gesamtquerschnitt, welcher zwischen zwei Fluidvolumen zum Strömen von Fluid zu Verfügung steht, desto besser, d. h. insbesondere schneller, kann ein Druckausgleich zwischen benachbarten, von den Durchflussöffnungen verbundenen Fluidvolumen erfolgen. Die Dämpfung der Anordnung 1 ist geringer als bei kleinerem Gesamtquerschnitt, welcher für die Fluidströmung zur Verfügung steht.

Bei einer Bewegung der Kolbenstange 2 in Richtung des Endes des Gehäuses 3 werden Durchflussöffnungen 5 vom Kolben der Kolbenstange 2 verschlossen. Die Zahl der Durchflussöffnungen 5 und somit der Gesamtquerschnitt für die Fluidströmung nimmt ab zwischen den Fluidvolumen B und C2, und die Dämpfung nimmt zu. Die Durchflussöffnungen 4 sind am Ende der Hülse 6 zum Gehäuse-Ende hin angeordnet, und stehen bis zum Ende der Bewegung der Kolbenstange 2 in Richtung des Endes des Gehäuses 3 für eine Fluidströmung zur Verfügung. Dadurch kann das Fluidvolumen B bei der Bewegung im Wesentlichen bis hin zu Null Volumen reduziert werden, mit einer maximalen Dämpfung der Bewegung zwischen dem Erreichen des Kolbens der Kolbenstange 2 der letzten Durchflussöffnungen 5 im Fluidvolumen B und dem Erreichen des Kolbens der Kolbenstange 2 der Durchflussöffnungen 4.

Über das Fluidvolumen C2, welches zwischen Hülse 6 und Gehäuse 3 ausgebildet ist und einen konstanten, zeitlich unveränderten Fluidkanal zwischen den, insbesondere allen Durchflussöffnungen 4, 5 bildet, kann Fluid vom Fluidvolumen B zum Fluidvolumen C1 strömen, bei Bewegung der Kolbenstange 2 in Richtung des Endes des Gehäuses 3, und bei umgekehrter Bewegung der Kolbenstange 2 kann Fluid vom Fluidvolumen C1 zum Fluidvolumen B strömen. Der Fluidkanal weist eine Größe auf, dass wenig Reibung mit dem Fluid und im Fluid selbst beim Strömen entsteht. Die Durchflussöffnungen 5 zwischen den Fluidvolumen C1 und C2 in der Hülse 6 weisen einen großen Querschnitt auf, insbesondere größer als der größte Gesamtquerschnitt der Durchflussöffnungen zwischen den Fluidvolumen C2 und B in der Hülse 6. Die Dämpfung wird somit durch den Gesamtquerschnitt der Durchflussöffnungen 4, 5 zwischen dem Fluidvolumen B und C2 bestimmt, welcher für die Fluidströmung zu einem Zeitpunkt zur Verfügung steht.

Bei einer Bewegung der Kolbenstange 2 in Richtung des Endes des Gehäuses 3 werden Durchflussöffnungen 5 in der Hülse 6 vom Kolben der Kolbenstange 2 verschlossen, welche zuvor für eine Fluidströmung vom Fluidvolumen B zum Fluidvolumen C2 zur Verfügung standen. Die Dämpfung nimmt zu und eine Bewegung der Kolbenstange 2 wird bei gleicher Antriebskraft zeitlich verstärkt abgebremst. Bei einer Bewegung der Kolbenstange 2 in die entgegengesetzte Richtung, d. h. in Richtung vom Ende des Gehäuses 3 weg, werden Durchflussöffnungen 5 in der Hülse 6 vom Kolben der Kolbenstange 2 freigegeben, welche zuvor für eine Fluidströmung vom Fluidvolumen B zum Fluidvolumen C2 nicht zur Verfügung standen, d. h. insbesondere vom Kolben der Kolbenstange 2 verschlossen waren. Die Dämpfung nimmt ab mit fortschreitender Bewegung. Eine Bewegung der Kolbenstange 2 wird bei gleicher Antriebskraft zeitlich immer weniger abgebremst.

Analog dem Ausführungsbeispiel der Anordnung 1 der Figur 1, erfolgt bei der Anordnung 1 gemäß dem Ausführungsbeispiel der Figur 2, bei einer Bewegung der Kolbenstange 2 in einer Richtung, nur eine Abnahme oder eine Zunahme der Dämpfung bzw. Dämpfungsrate. Eine Zunahme und darauffolgende Abnahme der Dämpfung bzw. Dämpfungsrate während einer Bewegung, d. h. einer Bewegung in einer Richtung, ist nicht möglich.

In Figur 3 ist schematisch ein Teil einer Anordnung 1 , die nicht Teil der Erfindung ist, zum Dämpfen von Schaltbewegungen dargestellt. Der als Schnitt entlang einer Längsachse gezeigte Teil umfasst, analog der Anordnung 1 der Figur 1, ein Ende des hohlzylinderförmigen, abgeschlossenen Gehäuses 3 mit einer im Gehäuse 3 beweglichen geführten Stange 7, insbesondere einer Schaltstange eines Hochspannungsleistungsschalters. Die Stange 7 ist an einem Ende, welches im Ende des Gehäuses 3 bewegbar ist, hohlrohr- insbesondere hohlzylinderförmig ausgebildet, mit einer Wandung 12, in welcher Durchflussöffnungen 10, 14 ausgebildet sind. In das hohlrohrförmige Ende der Stange 7 ragt ein Kolben 8 hinein. Der Kolben ist insbesondere kreiszylinderförmig, mit einem äußeren Umfang ausgebildet, welcher im Wesentlichen dem inneren Umfang des hohlrohrförmigen Endes der Stange 7 entspricht. Über einen Steg 9, insbesondere einen kreiszylinderförmigen Steg, mit einem äußerem Umfang kleiner dem Umfang des Kolbens 8, ist der Kolben 8 mit dem Gehäuse 3 verbunden.

Der Steg 9, der Kolben 8, das Gehäuse 3 und die Stange 7 weisen eine gemeinsame Achse 11 auf, insbesondere bei kreiszylindrischem Steg 9, kreiszylindrischem Kolben 8, kreiszylindrischem, hohlrohrförmigen Gehäuse 3 und kreiszylindrischer Stange 7, eine gemeinsame Rotationsachse, entlang welcher sich die Stange 7 gegenüber dem Gehäuse 3 bewegen kann. Bei einer Bewegung der Stange 7 im Gehäuse 3 bewegt sich der Kolben 8 analog in der hohlrohrförmigen Stange 7. Ein erstes Fluidvolumen A wird begrenzt durch eine Seite des Kolbens 8 und wenigstens Teilen des hohlen Inneren der hohlrohrförmigen Stange 7. In einem Bereich am Ende der Stange 7 und am geschlossenen Ende des Gehäuses 3 ist der äußere Umfang der Stange 7 im Wesentlichen gleich dem inneren Umfang des Gehäuses 3, was gleichbedeutend ist mit im Wesentlichen gleicher äußerer Form der Stange 7 und der Ausnehmung bzw. des hohlen Inneren des Gehäuses 3 in diesem Bereich. Die Stange 7 wird in diesem Bereich im Wesentlichen formschlüssig im Gehäuse 3, d. h. von der Gehäusewandung bei Bewegungen der Stange 7 geführt.

Der Steg 9 ist über den Bereich hinaus schmaler ausgebildet als der Kolben 8, d. h. mit einem geringeren Umfang als der Umfang der Ausnehmung im hohlen Ende der Stange 7. Zwischen dem Steg 9 und der Wandung 12 des hohlrohrförmigen Endes der Stange 7 ist ein Fluidkanal gebildet, welcher in ein Fluidvolumen B mündet bzw. von dem Fluidvolumen B umfasst wird, welches zwischen dem Ende der Stange 7 und dem Ende des Gehäuses 3 im Inneren gebildet wird. Das zweite Fluidvolumen B ist über Durchflussöffnungen 10 in der Wandung 12 des hohlrohrförmigen Endes der Stange 7 mit einem dritten Fluidvolumen C fluidisch verbunden, welches zwischen dem Äußeren der Stange 7 und dem Inneren des Gehäuses 3 im Bereich gebildet wird, welcher sich dem Bereich am Ende der Stange 7 und am geschlossenen Ende des Gehäuses 3 anschließt, in dem der äußere Umfang der Stange 7 im Wesentlichen gleich dem inneren Umfang des Gehäuses 3 ist.

Das dritte Fluidvolumen C ist über Durchflussöffnungen 10 in der Wandung 12 des hohlrohrförmigen Endes der Stange 7 mit dem ersten Fluidvolumen A verbunden, welches durch eine Seite des Kolbens 8 und wenigstens Teilen des hohlen Inneren der hohlrohrförmigen Stange 7 begrenzt wird. Durchflussöffnungen 10, 14 sind in der Wandung 12 entlang der Längsachse 11 in Regelmäßigen und/oder unregelmäßigen Abständen voneinander ausgebildet, und/oder entlang des insbesondere Kreisumfangs der Wandung 12. Die Durchflussöffnungen 10, 14, insbesondere in Form von runden Bohrungen und/oder Fräsungen, können unterschiedliche Querschnitte aufweisen, abhängig vom notwendigen Fluidstrom durch die Durchflussöffnungen 10, 14. Bei einer Bewegung der Stange 7 bewegt sich der Kolben 8 in der Stange 7 derart, dass Durchflussöffnungen 14 vom Kolben 8 temporär verschlossen werden. Die Stange 7 bewegt sich im Bereich am Ende der Stange 7 und am geschlossenen Ende des Gehäuses 3, in dem der äußere Umfang der Stange 7 im Wesentlichen gleich dem inneren Umfang des Gehäuses 3 ist, derart, dass temporär Durchflussöffnungen 14 in der Wandung 12 vom Gehäuse 3 verschlossen werden.

Bei Bewegung der Stange 7 im Gehäuse 3 in Richtung Ende des Gehäuses 3, wie es in Figur 3 dargestellt ist, entlang der Längsachse 11, werden Durchflussöffnungen 10, 14 in der Wandung 12 der Stange 7 durch den Kolben 8 insbesondere fluiddicht verschlossen, welche zuvor das Fluidvolumen A mit dem Fluidvolumen C verbunden hatten. Das räumliche Volumen des Fluidvolumens A nimmt ab und Fluid wird durch die offenen Durchflussöffnungen 10 vom Fluidvolumen A ins Fluidvolumen C gedrückt. Abhängig vom Gesamtquerschnitt der Durchflussöffnungen 10 zwischen dem Fluidvolumen A und C, d. h. dem Querschnitt der offenen Durchflussöffnungen 10 in Summe, und abhängig unter anderem von der Viskosität des Fluids und dem Druckunterschied zwischen den Fluidvolumen A und C, kann in einer Zeiteinheit nur eine bestimmte Menge Fluid durch die Durchflussöffnungen 10 zwischen dem Fluidvolumen A und C fließen. Im Fluidvolumen A wird ein Druck erhöht, welcher der Bewegung der Stange 7 entgegenwirkt, wodurch die Bewegung gedämpft wird. Die abnehmende Anzahl, und damit verbunden der abnehmende Gesamtquerschnitt der offenen Durchflussöffnungen 10 zwischen den Fluidvolumen A und C, bewirkt mit fortschreitender Bewegung eine Zunahme der Dämpfung über das Fluidvolumen A.

Auf der entgegengesetzten Seite des Kolbens 8 vom Fluidvolumen A aus betrachtet, ist das Fluidvolumen B über offene Durchflussöffnungen 10 in der Wandung 12 mit dem Fluidvolumen C fluidisch verbunden. Fluid, welches aus dem Fluidvolumen A in das Fluidvolumen C bei Bewegung der Stange strömt, kann vom Fluidvolumen C in das Fluidvolumen B strömen und umgekehrt. Bei Bewegung der Stange 7 im Gehäuse 3 in Richtung Ende des Gehäuses 3, wie es in Figur 3 dargestellt ist, entlang der Längsachse 11, nimmt das Volumen des Fluidvolumens B ab.

Fluid wird durch die offenen Durchflussöffnungen 10 vom Fluidvolumen B ins Fluidvolumen C gedrückt, bei einem höheren Druck im Fluidvolumen B als im Fluidvolumen C. Abhängig vom Gesamtquerschnitt der Durchflussöffnungen 10 zwischen dem Fluidvolumen B und C, d. h. dem Querschnitt der offenen Durchflussöffnungen 10 in Summe, und abhängig unter anderem von der Viskosität des Fluids und dem Druckunterschied zwischen den Fluidvolumen A und C, kann in einer Zeiteinheit nur eine bestimmte Menge Fluid durch die Durchflussöffnungen 10 zwischen dem Fluidvolumen B und C fließen. Im Fluidvolumen B wird ein Druck erhöht, welcher der Bewegung der Stange 7 entgegenwirkt, wodurch die Bewegung weiter gedämpft wird. Die Dämpfung der Anordnung 1 ist gleich der Summe der Dämpfungen durch die Verringerung des Fluidvolumens A, mit verbundenem Druckaufbau im Fluidvolumen A abhängig von der Fluidströmung vom Fluidvolumen A zum Fluidvolumen C über die offenen Durchflussöffnungen 10 zwischen beiden Fluidvolumen A und C, und der Dämpfung durch die Verringerung des Fluidvolumens B, mit verbundenem Druckaufbau im Fluidvolumen B abhängig von der Fluidströmung vom Fluidvolumen B zum Fluidvolumen C über die offenen Durchflussöffnungen 10 zwischen beiden Fluidvolumen B und C.

Der Gesamtquerschnitt der Durchflussöffnungen 10 zwischen dem Fluidvolumen B und C ist abhängig von den offenen Durchflussöffnungen 10 zwischen dem Fluidvolumen B und C, wobei bei fortschreitender Bewegung der Stange 7 Durchflussöffnungen 10, 14 in der Wandung 12 vom Bereich des Fluidvolumens A in den Bereich des Kolbens 8 und weiter in den Bereich zwischen Kolben 8 und dem Bereich am geschlossenen Ende des Gehäuses 3, in dem der äußere Umfang der Stange 7 im Wesentlichen gleich dem inneren Umfang des Gehäuses 3 ist, bewegt werden. Dabei werden die Durchflussöffnungen 10, 14 in der Wandung 12 im Bereich des Kolbens 8 vom Kolben 8 verschlossen und bei weiterer Bewegung im Bereich hinter dem Kolben 8 wieder freigegeben. Ab dem Bereich am geschlossenen Ende des Gehäuses 3, in dem der äußere Umfang der Stange 7 im Wesentlichen gleich dem inneren Umfang des Gehäuses 3 ist, werden die Durchflussöffnungen 10, 14 wieder verschlossen, in diesem Bereich vom Gehäuse 3.

Mit unterschiedlichen Querschnitten der Durchflussöffnungen 10, 14 in der Wandung 12 entlang der Längsachse 11, wird die Dämpfung unter anderem bestimmt vom Gesamtquerschnitt der Durchflussöffnungen 10 zwischen dem Kolben 8 und dem Bereich am geschlossenen Ende des Gehäuses 3, in dem der äußere Umfang der Stange 7 im Wesentlichen gleich dem inneren Umfang des Gehäuses 3 ist. Da die Durchflussöffnungen 10, 14 in diesem Bereich nur "durchwandern", können Durchflussöffnungen 10 mit geringem Querschnitt in dem Bereich zu einer starken Dämpfung führen und darauffolgende Durchflussöffnungen 10 mit größerem Querschnitt in dem Bereich zu einer geringeren Dämpfung führen, insbesondere bei Abständen von Durchflussöffnungen 10 im Bereich des Fluidvolumens A, welche groß genug sind, d. h. größer als die Abstände im Bereich, wo die Durchflussöffnungen 10 "durchwandern". Dann bleibt bei Bewegung des Kolbens 8 zwischen zwei Durchflussöffnungen 10 im Bereich des Fluidvolumens A die Dämpfung durch das Fluidvolumen A konstant, und Änderungen der Dämpfung werden bestimmt durch Durchflussöffnungen 10 im Bereich wo die Durchflussöffnungen 10 "durchwandern". Kleine Durchflussöffnungen 10 in dem Bereich führen zu einer starken Dämpfung und große Durchflussöffnungen 10 führen zu einer kleinen Dämpfung.

Die Dämpfung kann bei einer Folge von großen Durchflussöffnungen 10 auf kleine Durchflussöffnungen 10 abnehmen, nach einer vorherigen Zunahme und umgekehrt, oder wechselnd zu- und abnehmen bzw. ab- und zunehmen, abhängig der Querschnitte der aufeinanderfolgenden Durchflussöffnungen 10. Bei konstanter Antriebskraft, welche auf die Stange 7 wirkt, im Bereich der Dämpfungskraft der erfindungsgemäßen Anordnung 1, können Änderungen der Dämpfung über die aufeinanderfolgenden Querschnitte der Durchflussöffnungen 10, zu einer abwechselnden Dämpfung und Beschleunigung der Antriebsstange 7 bei einer Bewegung, d. h. einer Bewegung der Antriebsstange 7 in einer Richtung, führen.

In Figur 4 ist schematisch in Schnittansicht ein Ausführungsbeispiel einer erfindungsgemäßen Anordnung 1 gezeigt. Im Unterschied zum Ausführungsbeispiel der Figur 3 weist die erfindungsgemäße Anordnung 1 der Figur 4 eine Hülse 6 auf, welche Durchflussöffnungen 10 umfasst. Das hohlrohrförmige Ende 13 der Stange 7 ist nicht direkt in der Wandung des Gehäuses 3 gelagert und/oder geführt, sondern in der Hülse 6, welche am Ende des Gehäuses 3 befestigt ist. Im Bereich der Befestigung der Hülse 6 am Gehäuse 3 sind permanente Durchflussöffnungen 10 für das Fluid angeordnet. Die Hülse 6 teilt das Fluidvolumen C in zwei Teile C1 und C2. Das Fluidvolumen C2 ist vom Gehäuse 3 und der Hülse 6 begrenzt und das Fluidvolumen C1 ist von der Hülse 6 und der Stange 7 begrenzt.

Bei einer Bewegung der Stange 7 in Richtung des Endes des Gehäuses 3, wie es in Figur 4 gezeigt ist, entlang der Längsachse 11, wird der Kolben 8 in das hohlrohrförmige Ende 13 der Stange 7 weiter hinein bewegt, und das erste Fluidvolumen A wird verkleinert. Mit fortschreitender Bewegung wird eine zunehmende Zahl an Durchflussöffnungen 14 in der Wandung 12 des hohlrohrförmigen Endes 13 der Stange 7 verschlossen und die Zahl der offenen Durchflussöffnungen 10 in der Wandung 12 sowie der Gesamtquerschnitt für die Fluidströmung nimmt ab. Das Fluid kann bei gleicher Bewegung der Stange 7 bzw. Antriebskraft auf die Stange 7 langsamer aus dem ersten Fluidvolumen A durch die offenen Durchflussöffnungen 10 in der Wandung 12 in das Fluidvolumen C1 entweichen und die Kraft auf die Stange 7 bzw. Dämpfung nimmt zu, welche der Bewegung entgegenwirkt.

Gleichzeitig bewegt sich die Stange 7 in Richtung des Endes des Gehäuses 3 in der Hülse 6 derart, dass das zweite Fluidvolumen B abnimmt. Fluid kann durch die offenen Durchflussöffnungen 10 in der Hülse 6 entweichen, insbesondere durch die permanenten offenen Durchflussöffnungen 10 am Ende der Hülse, im Bereich wo die Hülse 6 mit dem Gehäuse verbunden ist. Mit fortschreitender Bewegung wird eine zunehmende Zahl an Durchflussöffnungen 14 in der Hülse 6 verschlossen und die Zahl der offenen Durchflussöffnungen 10 in direkter fluidischer Verbindung mit dem Fluidvolumen B sowie der Gesamtquerschnitt für die Fluidströmung aus dem Fluidvolumen B nimmt ab. Das Fluid kann bei gleicher Bewegung der Stange 7 bzw. Antriebskraft auf die Stange 7 langsamer aus dem zweiten Fluidvolumen B durch die offenen Durchflussöffnungen 10 in das Fluidvolumen C2 entweichen und die Kraft auf die Stange 7 bzw. Dämpfung nimmt zu, welche der Bewegung entgegenwirkt.

Bei fortschreitender Bewegung werden hinter dem Kolben 8, auf der Seite zum Steg 9 hin, vom Kolben 8 verschlossene Durchflussöffnungen 14 für die Fluidströmung freigegeben, d. h. Fluid aus dem Fluidvolumen B kann durch diese Durchflussöffnungen 10 in das Fluidvolumen C2 strömen. Vom Ende der Stange 13, welches im Wesentlichen fluiddicht in Verbindung mit der Hülse 6 in der Hülse 6 geführt ist, werden bei fortschreitender Bewegung verschlossene Durchflussöffnungen 14 in der Hülse 6 für die Fluidströmung freigegeben, d. h. Fluid aus dem Fluidvolumen C1, insbesondere Fluid, welches zuvor aus dem Fluidvolumen A in das Fluidvolumen C1 geströmt ist, kann durch diese Durchflussöffnungen 10 in das Fluidvolumen C2 strömen. Der Abströmquerschnitt, d. h. der Gesamtquerschnitt für die Fluidströmung durch offene Durchflussöffnungen 10 nimmt zu, insbesondere zum Ende der Bewegung hin bei entsprechender Anordnung der Durchflussöffnungen 10 und Wahl der Querschnitte. Das Fluid kann bei gleicher Bewegung der Stange 7 bzw. Antriebskraft auf die Stange 7 schneller aus dem zweiten Fluidvolumen B durch die offenen Durchflussöffnungen 10 in das Fluidvolumen C2 sowie schneller aus dem ersten Fluidvolumen A über das Fluidvolumen C1 durch die offenen Durchflussöffnungen 10 in der Hülse 6 in das Fluidvolumen C2 entweichen, und die Kraft auf die Stange 7 bzw. Dämpfung nimmt ab, welche der Bewegung entgegenwirkt. Bei gleicher Bewegung der Stange 7 bzw. Antriebskraft auf die Stange 7 kann die Stange 7 beschleunigt bewegt werden, insbesondere zum Ende der Bewegung hin, nach einer Abbremsung der Bewegung zuvor bei gleicher Bewegungsrichtung bzw. gleichem Schaltvorgang.

Das Fluid in den zuvor beschriebenen Ausführungsbeispielen ist ein Gas oder Gasgemisch, z. B. Luft und/oder Clean Air, und/oder eine Flüssigkeit, z. B. ein Öl. Das Gehäuse 3 ist mit dem Fluid befüllt, insbesondere vollständig befüllt. Das Gehäuse 3 kann vollständig gegenüber der Umwelt abgedichtet sein, insbesondere bei Verwendung von flüssigen Fluiden wie z. B. Öl oder umweltschädlichen Fluiden, wie z. B. SF₆, oder bei Fluiden wie z. B. Clean Air. Dazu kann auf einer Seite des Gehäuses 3 eine Art Rohrverschluss und/oder Deckel angeordnet sein, welcher insbesondere über einen Dichtring das Innere des Gehäuses 3, insbesondere eines hohlrohrförmigen Gehäuses, verschließt und/oder abdichtet. Der Rohrverschluss und/oder Deckel kann in das restliche Gehäuse 3 insbesondere über Gewinde eingeschraubt sein. Der Steg 9 kann alternativ auch direkt von innen im Gehäuse 3 verschraubt bzw. befestigt sein. Ohne Verwendung eines Rohrverschlusses und/oder Deckels, mit geschlossenem Gehäuseende, kann auf Dichtungen an dieser Stelle verzichtet werden.

Die zuvor beschriebenen Ausführungsbeispiele können, im Rahmen des von den beigefügten Ansprüchen definierten Gegenstands, untereinander kombiniert werden und/oder können mit dem Stand der Technik kombiniert werden. So können z. B. das Gehäuse 3, die Stange 7, der Kolben 8, der Steg 9 und/oder die Hülse 6 aus einem Metall sein oder ein Metall umfassen. Insbesondere können die Elemente der erfindungsgemäßen Anordnung 1 aus Stahl sein. Durchflussöffnungen 10, 14 können in dem Material, insbesondere Metall, durch Fräsen oder Bohren eingebracht sein. Das Gehäuse 3, die Stange 7, der Kolben 8, der Steg 9 und/oder die Hülse 6 können z. B. kreiszylindrische Formen aufweisen, und/oder rechteckige, quadratische, dreieckige und/oder elliptische Formen, d. h. Querschnitte senkrecht zur Längsachse 11 aufweisen.

### Bezugszeichenliste

- 1: Anordnung zum Dämpfen von Schaltbewegungen
- 2: Kolbenstange
- 3: Gehäuse, insbesondere zylinderförmiges Gehäuse
- 4: permanente Bohrung
- 5: Flötenbohrung
- 6: Hülse
- 7: Stange, insbesondere Schaltstange
- 8: Kolben
- 9: Steg
- 10: Durchflussöffnung, d. h. Fluidkanal
- 11: Längsachse
- 12: Wandung des hohlrohrförmigen Endes der Stange
- 13: hohlrohrförmiges Ende der Stange
- 14: vom Gehäuse/Kolben/Stange verschlossene Öffnung
- A: erstes Fluidvolumen
- B: zweites Fluidvolumen
- C: drittes Fluidvolumen
- C1: erster Teil des dritten Fluidvolumens
- C2: zweiter Teil des dritten Fluidvolumens

## Patentansprüche

1. Anordnung (1) zum Dämpfen von Schaltbewegungen, mit einem Gehäuse (3), welches wenigstens einen Kolben (8) räumlich umfasst, und welches wenigstens eine Stange (7) zumindest teilweise räumlich umfasst, wobei die Stange (7) relativ zum Gehäuse (3) beweglich gelagert ist, und der wenigstens eine Kolben (8) ein erstes Fluidvolumen (A) begrenzt, welches über wenigstens eine Durchflussöffnung (10) mit wenigstens einem zweiten Fluidvolumen (B) direkt oder indirekt fluidisch verbunden ist, wobei
die wenigstens eine Stange (7) an einem Ende hohlrohrförmig ausgebildet ist und das erste Fluidvolumen (A) räumlich umfasst, und wobei der wenigstens eine Kolben (8) in dem hohlrohrförmigen Ende der wenigstens einen Stange (7) geführt ist
wobei zwischen dem Gehäuse (3) und der wenigstens einen Stange (7) eine hohle Hülse (6) angeordnet ist, in welcher das hohlrohrförmige Ende (13) der wenigstens einen Stange (7) geführt ist, **dadurch gekennzeichnet, dass** Durchflussöffnungen (10) in der Hülse (6) vorgesehen sind.

2. Anordnung (1) nach Anspruch 1,
**dadurch gekennzeichnet, dass**
der wenigstens eine Kolben (8) räumlich fest gegenüber dem Gehäuse (3) angeordnet ist.

3. Anordnung (1) nach einem der vorhergehenden Ansprüche,
**dadurch gekennzeichnet, dass**
der Kolben (8) insbesondere über einen Steg (9) mit dem Gehäuse (3) verbunden ist, und/oder der Steg (9) einen kleineren Querschnitt senkrecht zu Längsachse (11) des Stegs (9) aufweist als der Kolben (8).

4. Anordnung (1) nach einem der vorhergehenden Ansprüche,
**dadurch gekennzeichnet, dass**
das erste Fluidvolumen (A) mit dem zweiten Fluidvolumen (B) über ein drittes Fluidvolumen (C) verbunden ist, insbesondere mit fluidischer Verbindung des ersten und dritten Fluidvolumens (A, C) sowie des dritten und zweiten Fluidvolumens (C, B) über Durchflussöffnungen (10) in einer Wandung (12) des hohlrohrförmigen Endes (13) der wenigstens einen Stange (7).

5. Anordnung (1) nach Anspruch 4,
**dadurch gekennzeichnet, dass**
das erste Fluidvolumen (A) durch die Wandung (12) des hohlrohrförmigen Endes (13) der wenigstens einen Stange (7) und dem Kolben (8) begrenzt wird, und/oder dass das dritte Fluidvolumen (C) zwischen der Stange (7) und dem Gehäuse (3) ausgebildet wird, und/oder dass das zweite Fluidvolumen (B) durch das Gehäuse (3) und durch die Wandung (12) des hohlrohrförmigen Endes (13) der wenigstens einen Stange (7) begrenzt wird sowie insbesondere dem Kolben (8) mit Steg (9) und insbesondere das Fluidvolumen von Öffnungen (14) umfasst, welche durch das Gehäuse (3) verschlossen sind.

6. Anordnung (1) nach einem der vorhergehenden Ansprüche,
**dadurch gekennzeichnet, dass**
mehrere Durchflussöffnungen (10) umfasst sind, insbesondere in der Wandung (12) des hohlrohrförmigen Endes (13) der wenigstens einen Stange (7) entlang der Längsachse (11) der Stange (7) angeordnet.

7. Anordnung (1) nach einem der vorhergehenden Ansprüche,
**dadurch gekennzeichnet, dass**
Durchflussöffnungen (10) mit unterschiedlichen Durchflussquerschnitten umfasst sind.

8. Anordnung nach Anspruch 4,
**dadurch gekennzeichnet, dass**
die hohle Hülse (6) das dritte Fluidvolumen (C) in zwei Teile teilt (C1, C2), insbesondere mit wenigstens einer Durchflussöffnung (10), welche die zwei Teile (C1, C2) des dritten Fluidvolumens (C) fluidisch miteinander verbindet, und/oder mit wenigstens einer Durchflussöffnung (10) insbesondere in der Wandung (12) des hohlrohrförmigen Endes (13) der wenigstens einen Stange (7), welche einen ersten Teil des dritten Fluidvolumens (C1) fluidisch mit dem ersten Fluidvolumen (A) verbindet, und/oder mit wenigstens einer Durchflussöffnung (10) in der Hülse (6) insbesondere am Ende der Hülse (6), welche einen zweiten Teil (C2) des dritten Fluidvolumens (C) fluidisch mit dem zweiten Fluidvolumen (B) verbindet.

9. Anordnung (1) nach einem der vorhergehenden Ansprüche,
**dadurch gekennzeichnet, dass**
Elemente der Anordnung (1) zylinderförmig ausgebildet sind, insbesondere das Gehäuse (3), und/oder die wenigstens eine Stange (7), und/oder der wenigstens eine Kolben (8), und/oder wenigstens eine Hülse (6), und/oder wenigstens ein Steg (9).

10. Anordnung (1) nach einem der vorhergehenden Ansprüche,
**dadurch gekennzeichnet, dass**
Durchflussöffnungen (10) als permanente Bohrung oder Fräsung und/oder flötenförmig ausgebildet sind.

11. Anordnung (1) nach einem der vorhergehenden Ansprüche,
**dadurch gekennzeichnet, dass**
das erste, und/oder zweite, und/oder dritte Fluidvolumen (A, B, C) insbesondere vollständig mit einem Fluid und/oder einer Fluidmischung befüllt ist, insbesondere mit einem Gas, insbesondere Luft und/oder Clean Air, und/oder mit einer Flüssigkeit, insbesondere einem Öl.

12. Anordnung (1) nach einem der vorhergehenden Ansprüche,
**dadurch gekennzeichnet, dass**
die Anordnung (1) von einem Hochspannungsleistungsschalter insbesondere zum Dämpfen von Schaltbewegungen umfasst ist.

13. Verfahren zum Dämpfen von Schaltbewegungen in einem Hochspannungsleistungsschalter, unter Verwendung einer Anordnung (1) nach einem der vorhergehenden Ansprüche,
**dadurch gekennzeichnet, dass**
die Dämpfungsrate der Anordnung (1) zum Dämpfen in einem Zeitabschnitt im zeitlichen Verlauf der Schaltbewegung abnimmt, insbesondere nach einer vorherigen Zunahme der Dämpfungsrate während der Schaltbewegung, und
a) eine Stange (7) mit einem hohlrohrförmigen Ende (13) in einem Gehäuse (3) derart bewegt wird, dass sich ein Kolben (8) in dem hohlrohrförmigen Ende (13) der Stange (7) bewegt und ein Fluid aus einem ersten Fluidvolumen (A) in dem hohlrohrförmigen Ende (13) der Stange (7) über Durchflussöffnungen (10) in der Wandung (12) des hohlrohrförmigen Endes (13) in ein drittes Fluidvolumen (C) fließt, welches zwischen der Stange (7) und dem Gehäuse (3) ausgebildet wird, und Fluid von einem zweiten Fluidvolumen (B), welches vom Kolben (8), dem Ende (13) der Stange (7) und dem Gehäuse (3) umfasst wird, über Durchflussöffnungen (10) in der Wandung (12) des hohlrohrförmigen Endes (13) der Stange (7) in das dritte Fluidvolumen (C) fließt oder dass
b) eine Stange (7) mit einem hohlrohrförmigen Ende (13) in einer Hülse (6), welche in einem Gehäuse (3) angeordnet wird, derart bewegt wird, dass sich ein Kolben (8) in dem hohlrohrförmigen Ende (13) der Stange (7) bewegt und ein Fluid aus einem ersten Fluidvolumen (A) in dem hohlrohrförmigen Ende (13) der Stange (7) über Durchflussöffnungen (10) in der Wandung (12) des hohlrohrförmigen Endes (13) in einen ersten Teil (C1) des dritten Fluidvolumens (C) fließt, welches zwischen der Stange (7) und der Hülse (6) ausgebildet wird, und Fluid von dem ersten Teil (C1) des dritten Fluidvolumens (C) in einen zweiten Teil (C2) des dritten Fluidvolumens (C) über Durchflussöffnungen (10) in der Hülse (6) fließt, wobei der zweite Teil (C2) des dritten Fluidvolumens (C) von der Hülse (6) und dem Gehäuse (3) gebildet wird, und Fluid von einem zweiten Fluidvolumen (B), welches von dem Kolben (8), dem Ende (13) der Stange (7), der Hülse (6) und dem Gehäuse (3) umfasst wird, in den zweiten Teil (C2) des dritten Fluidvolumens (C) über Durchflussöffnungen (10) in der Hülse (6) fließt.

## Claims

1. Assembly (1) for damping switching movements, having a housing (3) which spatially surrounds at least one piston (8) and which at least partially spatially surrounds at least one rod (7), wherein the rod (7) is mounted so as to be movable relative to the housing (3), and the at least one piston (8) delimits a first fluid volume (A) which is directly or indirectly fluidically connected via at least one throughflow opening (10) to at least one second fluid volume (B), wherein the at least one rod (7) is of hollow tubular form at one end and spatially surrounds the first fluid volume (A), and wherein the at least one piston (8) is guided in the hollow tubular end of the at least one rod (7), wherein,
between the housing (3) and the at least one rod (7), there is arranged a hollow sleeve (6) in which the hollow tubular end (13) of the at least one rod (7) is guided,
**characterized in that**
provision is made of throughflow openings (10) in the sleeve (6) .

2. Assembly (1) according to Claim 1,
**characterized in that**
the at least one piston (8) is arranged spatially fixedly relative to the housing (3).

3. Assembly (1) according to either of the preceding claims,
**characterized in that**
the piston (8) is connected in particular via a web (9) to the housing (3), and/or the web (9) has a smaller cross section perpendicular to the longitudinal axis (11) of the web (9) than the piston (8).

4. Assembly (1) according to one of the preceding claims,
**characterized in that**
the first fluid volume (A) is connected to the second fluid volume (B) via a third fluid volume (C), in particular with fluidic connection of the first and third fluid volumes (A, C) and of the third and second fluid volumes (C, B) via throughflow openings (10) in a wall (12) of the hollow tubular end (13) of the at least one rod (7).

5. Assembly (1) according to Claim 4,
**characterized in that**
the first fluid volume (A) is delimited by the wall (12) of the hollow tubular end (13) of the at least one rod (7) and by the piston (8), and/or **in that** the third fluid volume (C) is formed between the rod (7) and the housing (3), and/or **in that** the second fluid volume (B) is delimited by the housing (3) and by the wall (12) of the hollow tubular end (13) of the at least one rod (7) and also in particular by the piston (8) with web (9) and comprises in particular the fluid volume of openings (14) which are closed off by the housing (3).

6. Assembly (1) according to one of the preceding claims,
**characterized in that**
multiple throughflow openings (10) are comprised, in particular arranged in the wall (12) of the hollow tubular end (13) of the at least one rod (7) along the longitudinal axis (11) of the rod (7).

7. Assembly (1) according to one of the preceding claims,
**characterized in that**
throughflow openings (10) with different throughflow cross sections are comprised.

8. Assembly (1) according to Claim 4,
**characterized in that**
the hollow sleeve (6) divides the third fluid volume (C) into two parts (C1, C2), in particular with at least one throughflow opening (10) which fluidically connects the two parts (C1, C2) of the third fluid volume (C) to one another, and/or with at least one throughflow opening (10) in particular in the wall (12) of the hollow tubular end (13) of the at least one rod (7), which at least one throughflow opening fluidically connects a first part of the third fluid volume (C1) to the first fluid volume (A), and/or with at least one throughflow opening (10) in the sleeve (6) in particular at the end of the sleeve (6), which at least one throughflow opening fluidically connects a second part (C2) of the third fluid volume (C) to the second fluid volume (B).

9. Assembly (1) according to one of the preceding claims,
**characterized in that**
elements of the assembly (1) are of cylindrical form, in particular the housing (3) and/or the at least one rod (7) and/or the at least one piston (8) and/or at least one sleeve (6) and/or at least one web (9).

10. Assembly (1) according to one of the preceding claims,
**characterized in that**
throughflow openings (10) are formed as a permanent bore or milled portion and/or are of flute-like form.

11. Assembly (1) according to one of the preceding claims,
**characterized in that**
the first and/or second and/or third fluid volume (A, B, C) are/is filled in particular completely with a fluid and/or a fluid mixture, in particular with a gas, in particular air and/or clean air, and/or with a liquid, in particular an oil.

12. Assembly (1) according to one of the preceding claims,
**characterized in that**
the assembly (1) is comprised by a high-voltage circuit breaker, in particular for the purpose of damping switching movements.

13. Method for damping switching movements in a high-voltage circuit breaker using an assembly (1) according to one of the preceding claims,
**characterized in that**
the damping rate of the assembly (1) for damping decreases in a time period in the temporal profile of the switching movement, in particular after a prior increase of the damping rate during the switching movement, and
a) a rod (7) with a hollow tubular end (13) is moved in a housing (3) in such a way that a piston (8) is moved in the hollow tubular end (13) of the rod (7) and a fluid flows from a first fluid volume (A) in the hollow tubular end (13) of the rod (7) via throughflow openings (10) in the wall (12) of the hollow tubular end (13) into a third fluid volume (C) which is formed between the rod (7) and the housing (3), and fluid flows from a second fluid volume (B), which is surrounded by the piston (8), by the end (13) of the rod (7) and by the housing (3), via throughflow openings (10) in the wall (12) of the hollow tubular end (13) of the rod (7) into the third fluid volume (C), or **in that**
b) a rod (7) with a hollow tubular end (13) is moved in a sleeve (6), which is arranged in a housing (3), in such a way that a piston (8) is moved in the hollow tubular end (13) of the rod (7) and a fluid flows from a first fluid volume (A) in the hollow tubular end (13) of the rod (7) via throughflow openings (10) in the wall (12) of the hollow tubular end (13) into a first part (C1), formed between the rod (7) and the sleeve (6), of the third fluid volume (C), and fluid flows from the first part (C1) of the third fluid volume (C) into a second part (C2) of the third fluid volume (C) via throughflow openings (10) in the sleeve (6), wherein the second part (C2) of the third fluid volume (C) is formed by the sleeve (6) and by the housing (3), and fluid flows from a second fluid volume (B), which is surrounded by the piston (8), by the end (13) of the rod (7), by the sleeve (6) and by the housing (3), into the second part (C2) of the third fluid volume (C) via throughflow openings (10) in the sleeve (6).

## Revendications

1. Dispositif (1) d'amortissement de mouvements de coupure, comprenant une enveloppe (3), qui entoure spatialement au moins un piston (8) et qui entoure spatialement au moins en partie au moins une barre (7), dans lequel la barre (7) est montée mobile par rapport à l'enveloppe (3) et le au moins un piston (8) délimite un premier volume (A) de fluide, qui communique fluidiquement directement ou indirectement avec au moins un deuxième volume (B) de fluide par l'intermédiaire d'au moins une ouverture (10) de passage, dans lequel
la au moins une barre (7) est constituée à une extrémité sous la forme d'un tube creux et entoure spatialement le premier volume (A) de fluide et dans lequel le au moins un piston (8) est guidé dans l'extrémité en forme de tube creux de la au moins une barre (7),
dans lequel
entre l'enveloppe (3) et la au moins une barre (7) est disposé un manchon (6) creux, dans lequel passe l'extrémité (13) en forme de tube creux de la au moins une barre (7), **caractérisé en ce qu'**il est prévu des ouvertures (10) de passage dans le manchon (6).

2. Dispositif (1) suivant la revendication 1,
**caractérisé en ce que**
le au moins un piston (8) est disposé fixe dans l'espace par rapport à l'enveloppe (3).

3. Dispositif (1) suivant l'une des revendications précédentes,
**caractérisé en ce que**
le piston (8) est relié, notamment par une entretoise (9), à l'enveloppe (3), et/ou l'entretoise (9) a une section transversale perpendiculairement à l'axe (11) longitudinal de l'entretoise (9) plus petite que celle du piston (8).

4. Dispositif (1) suivant l'une des revendications précédentes,
**caractérisé en ce que**
le premier volume (A) de fluide communique avec le deuxième volume (B) de fluide par un troisième volume (C) de fluide, comprenant notamment une liaison fluidique entre le premier et le troisième volumes (A, C) de fluide ainsi qu'entre le troisième et le deuxième volumes (C, B) de fluide par des ouvertures (10) de passage dans une paroi (12) de l'extrémité (13) en forme de tube creux de la au moins une barre (7).

5. Dispositif (1) suivant la revendication 4,
**caractérisé en ce que**
le premier volume (A) de fluide est délimité par la paroi (12) de l'extrémité (13) en forme de tube creux de la au moins une barre (7) et par le piston (8), et/ou **en ce que** le troisième volume (C) de fluide est formé entre la barre (7) et l'enveloppe (3), et/ou **en ce que** le deuxième volume (B) de fluide est délimité par l'enveloppe (3) et par la paroi (12) de l'extrémité (13) en forme de tube creux de la au moins une barre (7) ainsi que, en particulier, par le piston (8) avec l'entretoise (9) et, en particulier, le volume de fluide comprend des ouvertures (14), qui sont fermées par l'enveloppe (3).

6. Dispositif (1) suivant l'une des revendications précédentes,
**caractérisé par**
plusieurs ouvertures (10) de passage, notamment dans la paroi (12) de l'extrémité (13) en forme de tube creux de la au moins une barre (7) disposée suivant l'axe (11) longitudinal de la barre (7) .

7. Dispositif (1) suivant l'une des revendications précédentes,
**caractérisé par**
des ouvertures (10) de passage ayant des sections transversales de passage différentes.

8. Dispositif suivant la revendication 4,
**caractérisé en ce que**
le manchon (6) creux subdivise en deux parties (C1, C2) le troisième volume (C) de fluide, notamment par la au moins une ouverture (10) de passage, qui met en communication entre elles fluidiquement les deux parties (C1, C2) du troisième volume (C) de fluide, et/ou par au moins une ouverture (10) de passage, notamment dans la paroi (12) de l'extrémité (13) en forme de tube creux de la au moins une barre (7), qui met en communication fluidique une première partie du troisième volume (C1) avec le premier volume (A) de fluide, et/ou par au moins une ouverture (10) de passage dans le manchon (6), notamment à l'extrémité du manchon (6), qui met en communication fluidique une deuxième partie (C2) du troisième volume (C) de fluide avec le deuxième volume (B) de fluide.

9. Dispositif (1) suivant l'une des revendications précédentes,
**caractérisé en ce que**
des éléments du dispositif (1) sont constitués en forme de cylindre, notamment l'enveloppe (3) et/ou la au moins une barre (7), et/ou le au moins un piston (8) et/ou au moins un manchon (6) et/ou au moins une entretoise (9).

10. Dispositif (1) suivant l'une des revendications précédentes,
**caractérisé en ce que**
des ouvertures (10) de passage sont constituées sous la forme de trous de fraisage permanents et/ou sont en forme de flûtes.

11. Dispositif (1) suivant l'une des revendications précédentes,
**caractérisé en ce que**
le premier et/ou deuxième et/ou troisième volume (A, B, C) de fluide est rempli, notamment complètement, d'un fluide et/ou d'un mélange de fluide, notamment d'un gaz, notamment d'air, et/ou de clean air, et/ou d'un liquide, notamment d'une huile.

12. Dispositif (1) suivant l'une des revendications précédentes,
**caractérisé en ce que**
le dispositif (1) est entouré d'un disjoncteur de haute tension, notamment pour l'amortissement de mouvements de coupure.

13. Procédé d'amortissement de mouvements de coupure dans un disjoncteur à haute tension, en utilisant un dispositif (1) suivant l'une des revendications précédentes,
**caractérisé en ce que**
la vitesse d'amortissement du dispositif (1) pour l'amortissement diminue dans un laps de temps au cours du temps des mouvements de coupure, notamment après une augmentation antérieure de la vitesse d'amortissement pendant le mouvement de coupure, et
a) on déplace une barre (7) ayant une extrémité (13) en forme de tube creux dans une enveloppe (3), de manière à ce qu'un piston (8) se déplace dans l'extrémité (13) en forme de tube creux de la barre (7) et de manière à ce qu'un fluide passe, par l'intermédiaire d'ouvertures (10) de passage dans la paroi (12) de l'extrémité (13) en forme de tube creux, d'un premier volume (A) de fluide dans l'extrémité (13) en forme de tube creux de la barre (7) à un troisième volume (C) de fluide, qui est constitué entre la barre (7) et l'enveloppe (3), et de manière à ce que du fluide d'un deuxième volume (B) de fluide, qui est entouré du piston (8), de l'extrémité (13) de la barre (7) et de l'enveloppe (3), passe au troisième volume (C) de fluide par l'intermédiaire d'ouvertures (10) de passage dans la paroi (12) de l'extrémité (13) en forme de tube creux de la barre (7) ou **en ce que**
b) on déplace une barre (7) ayant une extrémité (13) en forme de tube creux dans un manchon (6), qui est disposé dans une enveloppe (3), de manière à ce qu'un piston (8) se déplace dans l'extrémité (13) en forme de tube creux de la barre (7) et de manière à ce qu'un fluide passe, par l'intermédiaire d'ouvertures (10) de passage dans la paroi (12) de l'extrémité (13) en forme de tube creux, d'un premier volume (A) de fluide dans l'extrémité (13) en forme de tube creux de la barre (7) à une première partie (C1) du troisième volume (C) de fluide, qui est constitué entre la barre (7) et la manchon (6) et de manière à ce que du fluide de la première partie (C1) du troisième volume (C) de fluide passe dans une deuxième partie (C2) du troisième volume (C) de fluide par l'intermédiaire d'ouvertures (10) de passage dans le manchon (6), dans lequel on forme la deuxième partie (C2) du troisième volume (C) de fluide par le manchon (6) et l'enveloppe (3) et du fluide passe d'un deuxième volume (B) de fluide, qui est entouré du piston (8), de l'extrémité (13) de la barre (7), du manchon (6) et de l'enveloppe (3), à la deuxième partie (C2) du troisième volume (C) de fluide par l'intermédiaire d'ouvertures (10) de passage dans le manchon (6).
